# EUROPÄISCHE PATENTSCHRIFT

(11) **EP 1 813 645 B1**
(45) Veröffentlichungstag und Bekanntmachung des Hinweises auf die Patenterteilung: **17.09.2008**
(21) Anmeldenummer: 06124701.1
(22) Anmeldetag: 24.11.2006
(51) Int. Cl.: C08K 5/11, C08L 27/06

(54) **PVC-Zusammensetzung und deren Verwendung**
pvc-composition and use thereof
composition à base de pvc et son utilisation

(30) Priorität: 27.01.2006 DE 102006003913
(43) Veröffentlichungstag der Anmeldung: 01.08.2007
(73) Patentinhaber: Benecke-Kaliko AG, 30419 Hannover (DE)
(72) Erfinder: Buchkremer, Karl Dr., 30938, Burgwedel (DE)
(74) Vertreter: Finger, Karsten

(56) Entgegenhaltungen:
- EP-A1- 1 063 257

## Beschreibung

Die Erfindung betrifft eine PVC-Zusammensetzung für Powder-Slush-Moulding-Verfahren auf der Basis von S-PVC mit einem K-Wert gemäß DIN EN ISO 1628-2 von 68 bis 75, die Weichmacher aufweist. Ferner betrifft die Erfindung ein sinterfähiges Pulver für Powder-Slush-Moulding-Verfahren, das aus der PVC-Zusammensetzung hergestellt ist, und die Verwendung des sinterfähigen Pulvers für die Herstellung von Formkörpern.

Zur Herstellung von Innenauskleidungen von Kraftfahrzeugen, insbesondere zur Herstellung von Armaturenbrettern und Airbagabdeckungen, ist seit einiger Zeit die Anwendung so genannter Powder-Slush-Moulding-Verfahren (Rotationssintern) bekannt. Nach diesem Verfahren werden beispielsweise PVC-Pulver zu Sinterfolien verarbeitet, wobei das PVC-Pulver zusammensintert und geliert. Bei dem Powder-Slush-Moulding-Verfahren wird zunächst das Formwerkzeug aufgeheizt. Dann wird das PVC-Pulver eingefüllt und das Formwerkzeug rotiert. Dabei geliert das PVC. Nach dem Abkühlen wird der gebildete Formkörper der Form entnommen. Die erzeugten Formen können beispielsweise mit einem Polyurethanschaum hinterschäumt werden.

Nach dem Powder-Slush-Moulding-Verfahren hergestellte Produkte haben gegenüber tiefgezogenen Folien den Vorteil weitgehender Spannungsfreiheit und der Ermöglichung tiefer Hinterschnitte z. B. im Hutzenbereich. Das Powder-Slush-Moulding-Verfahren bietet hinsichtlich der möglichen Formen eine größere Gestaltungsfreiheit. Beispielsweise bleiben beim dem Powder-Slush-Moulding-Verfahren in der Form vorgegebenen Oberflächenstrukturen, wie z. B. Narbstrukturen, nach dem Herstellprozess erhalten, während beim Tiefziehen vorgegebene Oberflächenstrukturen verändert werden.

Um Formkörper aus PVC nach dem Powder-Slush-Moulding-Verfahren herzustellen, müssen sinterfähige PVC-Pulver, so genannte Dry-Blends, bereitgestellt werden, die nach einem Heiz-Kühlmischverfahren hergestellt werden. Solche PVC-Pulver werden beispielsweise in der US 5,840,236 beschrieben und beinhalten üblicherweise - neben PVC - Weichmacher und Stabilisatoren sowie ggf. weitere Additive, die für PVC üblich sind.

Unterschiedliche PVC-Typen werden technisch durch Suspensionspolymerisation (S-PVC), Mikro-Suspensionspolymerisation (Mikro-S-PVC), Emulsionspolymerisation (E-PVC) oder Massepolymerisation (M-PVC) hergestellt und werden unter anderem durch ihren K-Wert (Fikentscher-Konstante) charakterisiert.

Als Weichmacher für PVC-Zusammensetzungen sind unterschiedlichste Substanzen auch in Kombination einsetzbar. Als PVC-Weichmacher werden z. B. Phthalsäureester (Phthalate), Trimellitsäureester (Trimellitate), Adipinsäureester, Phosphorsäureester und Citronensäureester eingesetzt, wobei bestimmte Phthalsäureester (z. B. Dioctylphthalat und Dibenzylphthalat) derzeit als physiologisch und ökologisch bedenklich eingestuft werden.

Die EP 1 063 257 B1 offenbart zwei- oder mehrschichtige Flächengebilde aus PVChaltigem Material z. B. für Türverkleidungen im Automobilinnenraum. Das PVC-haltige Material liegt in dieser Schrift als Plastisol (kolloidale Dispersion von PVC, vorzugsweise E-PVC oder Mikro-S-PVC, in Weichmachern) vor und wird im Streichverfahren verarbeitet. Eine Verarbeitung dieses Materials nach dem Powder-Slush-Moulding-Verfahren ist nicht möglich. Als Alternative schlägt die EP 1 063 257 B1 vor, Granulat aus S-PVC zu plastifizieren und zu einer Folie zu extrudieren. Zur Vermeidung der Nachteile von PVC-Material, welches mit Phthalsäureestern weich gemacht ist, umfasst das PVC-haltige Material einen Citronensäureester als Weichmacher, bei dem die Hydroxylgruppe des Citronensäureesters nicht verestert ist. PVC-Zusammensetzungen mit diesen Estern zeigen allerdings ein verstärktes Fogging (Kondensation von verdampften, flüchtigen Bestandteilen aus der Kraftfahrzeug-Innenausstattung unter Ausbildung eines meist trüben Belags an den Innenseiten der Glasscheiben, insbesondere an der Windschutzscheibe) und weisen oft keine ausreichenden Wärmealterungseigenschaften auf.

Der Erfindung liegt die Aufgabe zu Grunde, eine PVC-Zusammensetzung bereitzustellen, die beim Powder-Slush-Moulding-Verfahren eingesetzt werden kann und aus der sich Formkörper herstellen lassen, die sich durch eine hervorragende Kälteflexibilität bei genügender Elastizität auszeichnen, ohne dass Ausschwitzungen von Weichmacher auftreten.

Gelöst wird die Aufgabe dadurch, dass die PVC-Zusammensetzung auf der Basis von S-PVC als Weichmacher, bezogen auf 100 Gew.-Teile S-PVC,
- 30 bis 50 Gew.-Teile zumindest eines vollständig veresterten Citronensäureesters, dessen Alkoholkomponenten gleich oder verschieden sind und 8 bis 12 Kohlenstoffatome aufweisen, und
- 1 bis 30 Gew.-Teile Dioctylsebacat (DOS) enthält.

Es hat sich überraschenderweise gezeigt, dass durch die spezielle Kombination der beiden Weichmacher in der angegebenen Anteilen in S-PVC-Zusammensetzungen Formkörper, insbesondere für Oberflächenverkleidungen von Verkehrsmittels, hergestellt werden können, die bei Temperaturen von -45 °C noch eine ausreichende Kälteflexibilität besitzen. Gleichzeitig ist die Biegesteifigkeit der Formkörper nicht zu hoch, das heißt, dass der Formkörper noch eine ausreichende Elastizität aufweist. Ausschwitzungen von Weichmacher, die sich durch eine gewisse Klebrigkeit des Materials bemerkbar machen, konnten bei Formkörpern, die aus der erfindungsgemäßen Zusammensetzung hergestellt sind, nicht festgestellt werden.

Die erfindungsgemäße Zusammensetzung weist außerdem den Vorteil auf, dass die daraus hergestellten Formkörper ein gutes Wärmealterungs- und Heißluftalterungsverhalten zeigen und dass sie sich hervorragend nach dem Powder-Slush-Moulding-Verfahren verarbeiten lässt.

Die in der PVC-Zusammensetzung verwendeten Weichmacher werden außerdem als ökologisch unbedenklich eingestuft, da sie aromatenfrei sind und der Citronensäureester auf nachwachsenden Rohstoffen beruht.

Die erfindungsgemäße PVC-Zusammensetzung enthält 30 bis 50 Gew.-Teile, bevorzugt 35 bis 45 Gew.-Teile, zumindest eines vollständig veresterten Citronensäureesters, dessen Alkoholkomponenten gleich oder verschieden sind und 8 bis 12 Kohlenstoffatome aufweisen. Bei Anteilen von mehr als 50 Gew.-Teilen des Citronensäureesters kann es zu Ausschwitzungen des Weichmachers kommen. Bei den Alkoholen kann es sich sowohl um lineare als auch um verzeigte Typen handeln. Als vollständig veresterte Citronensäureester können beispielsweise Acetyltri-2-ethylhexylcitrat oder Acetyltri-2-n-octylcitrat eingesetzt werden. Es ist auch möglich mehrere Citronensäureester im Gemisch einzusetzen.

Neben dem Citronensäureester enthält die PVC-Zusammensetzung als weiteren Weichmacher zwingend 1 bis 30 Gew.-Teile, vorzugsweise 15 bis 25 Gew.-Teile, Dioctylsebacat. Bei mehr als 30 Gew.-Teilen Dioctylsebacat besteht die Gefahr von Ausschwitzungen bei Wärmelagerungen.

Zur weiteren Verbesserung der Eigenschaften der aus der PVC-Zusammensetzung hergestellten Formkörper kann die PVC-Zusammensetzung weitere Weichmacher, wie z. B. 5 bis 30 Gew.-Teile eines Weichmachers auf der Basis von Adipinsäure oder 5 bis 30 Gew.-Teile eines Trimellitates enthalten, wobei Weichmacher auf der Basis von Adipinsäure den Vorteil bieten, dass sie aromatenfrei sind. Die Verwendung von mehr als 30 Gew.-Teilen eines Weichmachers auf der Basis von Adipinsäure kann die Kälteflexibilität beeinträchtigen.

Gemäß einer vorteilhaften Weiterbildung der Erfindung enthält die PVC-Zusammensetzung 3 bis 6 Gew.-Teile, bezogen auf 100 Gew.-Teile S-PVC, zumindest einer Calcium/Zink-Verbindung als Stabilisator.

Als Schutz vor einem aminischen Angriff aus dem ggf. zur Hinterschäumung verwendeten Polyurethans hat es sich als sinnvoll erwiesen, wenn die PVC-Zusammensetzung als starkes Oxidationsmittel 0,2 bis 2 Gew.-Teile, bezogen auf 100 Gew.-Teile S-PVC, zumindest eines Perchlorates enthält.

Die PVC-Zusammensetzung weist außerdem vorzugsweise 1 bis 4 Gew.-Teile, bezogen auf 100 Gew.-Teile S-PVC, zumindest eines Zeolithen und/oder zumindest eines Hydrotalcites auf. Diese Substanzen binden das bei der Alterung von PVC frei werdende und für die weitere Zersetzung katalytisch wirksame HCl.

Die PVC-Zusammensetzung kann ferner übliche Additive, wie z. B. Pigmente, Farbstoffe, Flammschutzmittel, UV-Absorber, Entformungshilfsmittel (Schlichte), Füllstoffe und Antioxidation, in üblichen Mengen enthalten.

Aus der erfindungsgemäßen PVC-Zusammensetzung kann nach dem Zusammenmischen der Substanzen im Heiz-Kühlmischer ein riesel- und sinterfähiges Pulver, ein so genanntes Dry-Blend, hergestellt werden. Zur besseren Rieselfähigkeit können am Ende des Heiz-Kühlmischens 5 bis 10 Gew.-Teile, bezogen auf 100 Gew.-Teile S-PVC, eines E-PVC oder eines Mikro-S-PVC als Rieselhilfe zugegeben werden. Im Anschluss wird das Pulver gesiebt.

Das sinterfähige PVC-Pulver kann zur Herstellung von Formkörpern nach dem Powder-Slush-Moulding-Verfahren eingesetzt werden. Dabei wird das Pulver in eine Rotationssinteranlage gegeben, deren Nickel-galvanoformen beispielsweise mit einer genarbten Oberfläche ausgestattet sind und die Negativform des gewünschten Form- oder Bauteils aufweisen. Nach dem Aufschmelzen und der Formung einer dreidimensionalen Sinterhaut wird diese abgekühlt und aus der Form gezogen. Die so erzeugten Slushhäute können weiterverarbeitet und beispielsweise auf der Rückseite mit einem Polyurethanschaum hinterschäumt werden.

Bei den Formkörpern, die aus dem sinterfähigen Pulver hergestellt werden, kann es sich z. B. um eine Oberflächenverkleidung eines Verkehrsmittels, insbesondere ein Armaturenbrett, eine Airbagabdeckung, eine Konsole und/oder eine Kraftfahrzeugtürverkleidung handeln. Mit ihrer hervorragenden Kälteflexibilität bei genügender Elastizität ohne Ausschwitzungen von Weichmacher genügen die Formkörper den hohen Anforderungen der Kfz-Industrie an Innenraumverkleidungen. Auch bei Schienenfahrzeugen können die Formkörper verwendet werden.

Die Erfindung wird nun anhand von Vergleichs- und Ausführungsbeispielen, die in Tabelle 1 dargestellt sind, näher erläutert. Dazu wurden Formteile gemäß folgender Beschreibung hergestellt:

Die in der folgenden Tabelle 1 formulierten PVC-Zusammensetzungen wurden in Form von sinterfähigen Pulvern zu DIN A4 dimensionierten Prüfplatten mit einer Dicke von 1 mm verarbeitet. Dabei wurde eine galvanisierte und mit einer lederförmig genarbten Oberfläche versehene Form, die einen Seiten begrenzenden 2 mm hohen Rand aufwies, in einem Umluftofen 15 min auf 240 °C aufgeheizt und aus dem Ofen genommen. Die vorgenannten sinterfähigen Pulver wurden auf die heiße Form geschüttet und nach ca. 10 s umgedreht, um überschüssiges Pulver zu entfernen. Anschließend ließ man die Form im Ofen weitere 2 min nachsintern. Die Form wurde mit kaltem Wasser abgekühlt und die 1 mm dicke Prüfplatte in Form einer Slushhaut entnommen.

Die so erzeugten Slushhäute wurden hinsichtlich ihrer Heißlichtalterung (gemäß DIN 57202, 115 °C bp (schwarz-Tafel-Temperatur), 5 Zyklen) und ihrer Kälteflexibilität (mit einer Kugelfallprüfung) untersucht. Bei der Untersuchung der Kälteflexibilität wird eine Kugel mit einem Durchmesser von 50 mm und einem Gewicht von 500 g aus 230 mm Abstand auf die auf Minustemperaturen temperierte Slushhaut fallen gelassen. Bleibt die Haut dabei unbeschädigt, ist der Versuch mit o. k. zu bewerten.

Ferner wurden die vorgenannten Slushhäute in Form von hinterschäumtem Material hinsichtlich des Wärmealterungsverhaltens (500 h bei 120 °C) untersucht. Zur Erzeugung des hinterschäumten Materials wurden die Slushhäute in einer vorgeheizten Form auf der Rückseite mit den Ausgangsmaterialien eines Polyurethanschaumes versehen und dieser Schaum ausreagiert. Der Verbund aus Schaum und Slushhaut wurde dann der Wärmealterung unterzogen.

Die Bewertung der Wärme- und Heißlichtalterung erfolgte über ein Rating mit Noten von 1 bis 5, wobei die Note 1 für das schlechteste und die Note 5 für das beste Alterungsverhalten steht.

**Tabelle 1**

| Substanz | Vergl.-bsp. 1 | Vergl.-bsp.2 | Vergl.-bsp.3 | Beispiel 4 |
|---|---|---|---|---|
| S-PVC, K-Wert 70 | 100 | 100 | 100 | 100 |
| epoxidiertes Sojaöl | 6 | 6 | 6 | 6 |
| Mikro-S-PVC | 9 | 9 | 9 | 9 |
| Entformungshilfsmittel | 0,2 | 0,2 | 0,2 | 0,2 |
| Calcium/Zink-Stabilisator | 4 | 4 | 4 | 4 |
| Pigmente | 0,5 | 0,5 | 0,5 | 0,5 |
| Zeolith | 2 | 2 | 2 | 2 |
| Dioctylsebacat | 20 | - | 50 | 20 |
| Adipinsäureester^{a} | 28 | - | 20 | 10 |
| Acetyltri-2-ethylhexylcitrat | 20 | 70 | - | 40 |
| Eigenschaften | | | | |
| Wärmealterung | 3-4 | < 2 | 3-4 | 3-4 |
| | | | Bemerkung: klebrig, hohe Biegesteifigkeit | |
| Heißlichtalterung | 4-5 | 3 | 4 | 4-5 |
| Kälteflexibilität | bis -30 °C o.k. | bis -30 °C o.k. | bis -45 °C o.k. | bis -45 °C o.k. |

| | | | | |
|---|---|---|---|---|
| ^{a} Palamoll^{®} 654P, BASF Aktiengesellschaft, Deutschland | | | | |

Aus der Tabelle 1 wird ersichtlich, dass sich mit der erfindungsgemäßen S-PVC-Zusammensetzung 4, die sowohl einen vollständig veresterten Citronensäureester als auch Dioctylsebacat (DOS) in den beanspruchten Mengen enthält, Formkörper herstellen lassen, die sich durch ein gutes Wärmealterungsverhalten und eine sehr gute Heißlichtalterung auszeichnen und die bis zu Temperaturen von -45 °C eine ausreichende Kälteflexibilität aufweisen. Ausschwitzungen von Weichmacher bei Wärmealterung, wie sie in Beispiel 3 beobachtet werden (Klebrigkeit), sind nicht zu verzeichnen und auch die Elastizität ist nicht beeinträchtigt. Bei der Zusammensetzung 1, die zwar DOS und Citronensäureester enthält, scheint die Menge an Citronensäureester für das optimale Zusammenspiel zwischen DOS und Citronensäureester nicht ausreichend zu sein, um eine hinreichende Kälteflexibilität zu gewährleisten. Aus dem Vergleichsbeispiel 1 wird auch ersichtlich, dass die Gesamtmenge an Weichmacher in der Zusammensetzung nicht entscheidend für die Kälteflexibilität ist, denn Zusammensetzung 1 und 4 enthalten zwar ungefähr die gleichen Mengen an Weichmacher (DOS, Adipinsäureester, Citronensäureester), aber ein großer Anteil an Adipinsäureester kann das Problem der Kälteflexibilität nicht lösen.

Auch Citronensäureester allein (Vergleichsbeispiel 2) bringt keine Verbesserung der Kälteflexibilität und bewirkt außerdem Einbußen im Wärme- und Heißlichtalterungsverhalten.

Mit der Zusammensetzung des Vergleichsbeispiels 3 (nur DOS und Adipinsäureester) konnte zwar die Kälteflexibilität verbessert werden, allerdings verschlechterte sich das Heißlichtalterungsverhalten ein wenig und es ergab sich ein völlig inakzeptables Ausschwitzen des Weichmachers - da Material war klebrig - und das Material war zu steif.

## Patentansprüche

1. PVC-Zusammensetzung für Powder-Slush-Moulding-Verfahren auf der Basis von S-PVC mit einem k-Wert gemäß DIN EN ISO 1628-2 von 68 bis 75, die Weichmacher aufweist, **dadurch gekennzeichnet, dass** sie als Weichmacher, bezogen auf 100 Gew.-Teile S-PVC,
- 30 bis 50 Gew.-Teile zumindest eines vollständig veresterten Citronensäureesters, dessen Alkoholkomponenten gleich oder verschieden sind und 8 bis 12 Kohlenstoffatome aufweisen, und
- 1 bis 30 Gew.-Teile Dioctylsebacat (DOS) enthält.

2. PVC-Zusammensetzung nach Anspruch 1, **dadurch gekennzeichnet, dass** sie 35 bis 45 Gew.-Teile, bezogen auf 100 Gew.-Teile S-PVC, zumindest eines vollständig veresterten Citronensäureesters enthält.

3. PVC-Zusammensetzung nach Anspruch 1 oder 2, **dadurch gekennzeichnet, dass** sie 15 bis 25 Gew.-Teile Dioctylsebacat enthält.

4. PVC-Zusammensetzung nach zumindest einem der Ansprüche 1 bis 3, **dadurch gekennzeichnet, dass** sie 5 bis 30 Gew.-Teile, bezogen auf 100 Gew.-Teile S-PVC, eines weiteren Weichmachers auf der Basis von Adipinsäure enthält.

5. PVC-Zusammensetzung nach zumindest einem der Ansprüche 1 bis 3, **dadurch gekennzeichnet, dass** sie 5 bis 30 Gew.-Teile, bezogen auf 100 Gew.-Teile S-PVC, eines Trimellitates als weiteren Weichmacher enthält.

6. PVC-Zusammensetzung nach zumindest einem der vorhergehenden Ansprüche, **dadurch gekennzeichnet, dass** sie 3 bis 6 Gew.-Teile, bezogen auf 100 Gew.-Teile S-PVC, zumindest einer Calcium/Zink-Verbindung als Stabilisator enthält.

7. PVC-Zusammensetzung nach zumindest einem der vorhergehenden Ansprüche, **dadurch gekennzeichnet, dass** sie 0,2 bis 2 Gew.-Teile, bezogen auf 100 Gew.-Teile S-PVC, zumindest eines Perchlorates enthält.

8. PVC-Zusammensetzung nach zumindest einem der vorhergehenden Ansprüche, **dadurch gekennzeichnet, dass** sie 1 bis 4 Gew.-Teile, bezogen auf 100 Gew.-Teile S-PVC, zumindest eines Zeolithen und/oder zumindest eines Hydrotalcites enthält.

9. Sinterfähiges Pulver für Powder-Slush-Moulding-Verfahren, das aus einer PVC-Zusammensetzung gemäß Anspruch 1 hergestellt ist.

10. Sinterfähiges Pulver nach Anspruch 8, **dadurch gekennzeichnet, dass** es 5 bis 10 Gew.-Teile, bezogen auf 100 Gew.-Teile S-PVC, eines E-PVC oder eines Mikro-S-PVC als Rieselhilfe aufweist.

11. Verwendung eines sinterfähigen Pulvers gemäß Anspruch 8 für die Herstellung von Formkörpern mit dem Powder-Slush-Moulding-Verfahren.

12. Verwendung nach Anspruch 10, **dadurch gekennzeichnet, dass** der Formkörper eine Oberflächenverkleidung im Innenraum eines Verkehrsmittels, insbesondere ein Armaturenbrett, eine Airbagabdeckung, eine Konsole und/oder eine Kraftfahrzeugtürverkleidung, ist.

## Claims

1. PVC composition for powder slush moulding processes, based on SPVC whose K value to DIN EN ISO 1628-2 is from 68 to 75, where the composition comprises plasticizer, **characterized in that** it comprises, as plasticizer, based on 100 parts by weight of SPVC,
- from 30 to 50 parts by weight of at least one completely esterified citric ester whose alcohol components are identical or different and have from 8 to 12 carbon atoms, and
- from 1 to 30 parts by weight of dioctyl sebacate (DOS).

2. PVC composition according to Claim 1, **characterized in that** it comprises from 35 to 45 parts by weight, based on 100 parts by weight of SPVC, of at least one completely esterified citric ester.

3. PVC composition according to Claim 1 or 2, **characterized in that** it comprises from 15 to 25 parts by weight of dioctyl sebacate.

4. PVC composition according to at least one of Claims 1 to 3, **characterized in that** it comprises from 5 to 30 parts by weight, based on 100 parts by weight of SPVC, of a further plasticizer based on adipic acid.

5. PVC composition according to at least one of Claims 1 to 3, **characterized in that** it comprises from 5 to 30 parts by weight, based on 100 parts by weight of SPVC, of a trimellitate as further plasticizer.

6. PVC composition according to at least one of the preceding claims, **characterized in that** it comprises from 3 to 6 parts by weight, based on 100 parts by weight of SPVC, of at least one calcium/zinc compound as stabilizer.

7. PVC composition according to at least one of the preceding claims, **characterized in that** it comprises from 0.2 to 2 parts by weight, based on 100 parts by weight of SPVC, of at least one perchlorate.

8. PVC composition according to at least one of the preceding claims, **characterized in that** it comprises from 1 to 4 parts by weight, based on 100 parts by weight of SPVC, of at least one zeolite and/or of at least one hydrotalcite.

9. Sinterable powder for powder slush moulding processes, which has been produced from a PVC composition according to Claim 1.

10. Sinterable powder according to Claim 9, **characterized in that** it comprises from 5 to 10 parts by weight, based on 100 parts by weight of SPVC, of an EPVC or of a micro-SPVC as powder-flow aid.

11. Use of a sinterable powder according to Claim 8 for the production of mouldings by the powder slush moulding process.

12. Use according to Claim 11, **characterized in that** the moulding is a surface cladding in the interior of a conveyance, and in particular is a dashboard, an airbag cover, a console and/or a motor-vehicle-door cladding.

## Revendications

1. Composition de PVC destinée à être utilisée dans le procédé de moulage par fusion de poudre, à base de PVC S dont l'indice k selon DIN EN ISO 1628-2 est de 68 à 75 et contenant des plastifiants,
**caractérisée en ce que**
comme plastifiants et par rapport à 100 parties en poids de PVC S, elle contient :
- de 30 à 50 parties en poids d'au moins un ester complètement estérifié d'acide citrique, dont les composants alcools sont identiques ou différents et comptent de 8 à 12 atomes de carbone et
- de 1 à 30 parties en poids de sébacate de dioctyle (DOS).

2. Composition de PVC selon la revendication 1, **caractérisée en ce qu'**elle contient par rapport à 100 parties en poids de PVC S de 35 à 45 parties en poids d'au moins un ester complètement estérifié d'acide citrique.

3. Composition de PVC selon les revendications 1 ou 2, **caractérisée en ce qu'**elle contient de 15 à 25 parties en poids de sébacate de dioctyle.

4. Composition de PVC selon au moins l'une des revendications 1 à 3, **caractérisée en ce qu'**elle contient par rapport à 100 parties en poids de PVC S de 5 à 30 parties en poids d'un autre plastifiant à base d'acide adipique.

5. Composition de PVC selon au moins l'une des revendications 1 à 3, **caractérisée en ce qu'**elle contient par rapport à 100 parties en poids de PVC S de 5 à 30 parties en poids d'un trimellitate qui sert d'autre plastifiant.

6. Composition de PVC selon au moins l'une des revendications précédentes, **caractérisée en ce qu'**elle contient par rapport à 100 parties en poids de PVC S de 3 à 6 parties en poids d'au moins un composé de calcium ou de zinc qui sert de stabilisateur.

7. Composition de PVC selon au moins l'une des revendications précédentes, **caractérisée en ce qu'**elle contient par rapport à 100 parties en poids de PVC S de 0,2 à 2 parties en poids d'au moins un perchlorate.

8. Composition de PVC selon au moins l'une des revendications précédentes, **caractérisée en ce qu'**elle contient par rapport à 100 parties en poids de PVC S de 1 à 4 parties en poids d'au moins une zéolithe et/ou d'au moins une hydrotalcite.

9. Poudre frittable destinée à être utilisée dans un procédé de moulage par fusion de poudre et préparée à partir d'une composition selon la revendication 1.

10. Poudre frittable selon la revendication 9, **caractérisée en ce qu'**elle présente par rapport à 100 parties en poids de PVC S de 5 à 10 parties en poids d'un PVC E ou d'une PVC micro S comme adjuvant d'écoulement.

11. Utilisation d'une poudre frittable selon la revendication 8 pour la fabrication de corps moulés par le procédé de moulage par fusion de poudre.

12. Utilisation selon la revendication 11, **caractérisée en ce que** le corps moulé est un habillage de surface pour l'habitacle d'un moyen de transport, en particulier un tableau de bord, un couvercle de coussin gonflable de sécurité, une console et/ou un habillage de porte de véhicule automobile.
